# EUROPEAN PATENT APPLICATION

(11) **EP 4 693 988 A1**
(43) Date of publication of application: **11.02.2026**
(21) Application number: 23931391.9
(22) Date of filing: 06.04.2023
(51) Int. Cl.: H04L 5/00, H04W 28/04

(54) **WIRELESS COMMUNICATION METHOD AND COMMUNICATION APPARATUS**

(71) Applicant: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN); LENG, Bingxue, Dongguan, Guangdong 523860 (CN)
(74) Representative: RGTH
(86) International application number: PCT/CN2023/086620
(87) International publication number: WO 2024/207321

(57) **Abstract**

Provided are a wireless communication method and a communications apparatus. The method comprises: a first device sends first information to a second device, wherein a protocol stack of the first device does not comprise a packet data convergence protocol (PDCP) layer. In embodiments of the present application, a PDCP layer is no longer configured in the protocol stack of the first device, and compared with a first device that performs communication on the basis of a conventional protocol stack, the present invention facilitates reduction of the communication complexity of the first device.

## Description

### TECHNICAL FIELD

This application relates to the field of communications technologies, and more specifically, to a wireless communication method and a communications apparatus.

### BACKGROUND

Currently, for a first device with a relatively weak capability, the first device is required to perform communication according to functions of various protocol layers in a conventional protocol stack, which leads to relatively high communication complexity of the first device. In this case, the capability of the first device cannot match communication complexity of the first device.

### SUMMARY

This application provides a wireless communication method and a communications apparatus. The following describes the aspects related to this application.

According to a first aspect, there is provided a wireless communication method. The wireless communication method includes: transmitting, by a first device, first information to a second device, where a protocol stack of the first device does not include a packet data convergence protocol (packet data convergence protocol, PDCP) layer.

According to a second aspect, there is provided a wireless communication method. The wireless communication method includes: receiving, by a second device, first information transmitted by a first device, where a protocol stack of the second device does not include a packet data convergence protocol PDCP layer.

According to a third aspect, there is provided a communications apparatus. The communications apparatus is a first device, and includes: a transmitting unit, configured to transmit first information to a second device, where a protocol stack of the first device does not include a packet data convergence protocol PDCP layer.

According to a fourth aspect, there is provided a communications apparatus. The communications apparatus is a second device, and includes: a receiving unit, configured to receive first information transmitted by a first device, where a protocol stack of the second device does not include a packet data convergence protocol PDCP layer.

According to a fifth aspect, there is provided a communications device. The communications device includes a processor, a memory, and a communications interface. The memory is configured to store one or more computer programs, and the processor is configured to invoke the computer program in the memory, to cause the terminal device to execute some or all of the steps in the methods according to the foregoing aspects.

According to a sixth aspect, an embodiment of this application provides a communications system, and the system includes the first device and/or the second device described above. In another possible design, the system may further include another device that interacts with the first device or the second device in the solutions provided in embodiments of this application.

According to a seventh aspect, an embodiment of this application provides a computer-readable storage medium. The computer-readable storage medium stores a computer program, and the computer program causes a communications device (for example, a first device or a second device) to execute some or all of the steps in the methods according to the foregoing aspects.

According to an eighth aspect, an embodiment of this application provides a computer program product. The computer program product includes a non-transitory computer-readable storage medium that stores a computer program. The computer program is operable to cause a communications device (for example, a terminal device or a network device) to perform some or all of the steps of the method in each of the foregoing aspects. In some implementations, the computer program product may be a software installation package.

According to a ninth aspect, an embodiment of this application provides a chip. The chip includes a memory and a processor. The processor may invoke a computer program from the memory and run the computer program, to implement some or all of the steps described in the methods according to the foregoing aspects.

In embodiments of this application, the PDCP layer is no longer provided in the protocol stack of the first device, which is conducive to reducing communication complexity of the first device compared to communication of the first device based on a conventional protocol stack.

### BRIEF DESCRIPTION OF DRAWINGS

FIG. 1A shows a wireless communications system 100 to which embodiments of this application are applied.
FIG. 1B shows a wireless communications system 100 to which another embodiment of this application is applied.
FIG. 2 is a schematic diagram of a conventional user plane protocol stack.
FIG. 3 is a schematic diagram of a conventional control plane protocol stack.
FIG. 4 is a schematic diagram of a possible integrity protection-related algorithm to which embodiments of this application are applied.
FIG. 5 is a schematic diagram of a control plane protocol stack of a first device according to an embodiment of this application.
FIG. 6 is a schematic diagram of a control plane protocol stack of a first device according to another embodiment of this application.
FIG. 7 is a schematic diagram of a user plane protocol stack of a first device according to an embodiment of this application.
FIG. 8 is a schematic diagram of a user plane protocol stack of a first device according to another embodiment of this application.
FIG. 9 is a schematic diagram of a control plane protocol stack of a relay device according to an embodiment of this application.
FIG. 10 is a schematic diagram of a control plane protocol stack of a relay device according to another embodiment of this application.
FIG. 11 is a schematic diagram of a user plane protocol stack of a relay device according to an embodiment of this application.
FIG. 12 is a schematic diagram of a user plane protocol stack of a relay device according to another embodiment of this application.
FIG. 13 is a schematic diagram of a control plane protocol stack of a third device according to an embodiment of this application.
FIG. 14 is a schematic diagram of a control plane protocol stack of a third device according to another embodiment of this application.
FIG. 15 is a schematic diagram of a user plane protocol stack of a third device according to an embodiment of this application.
FIG. 16 is a schematic diagram of a user plane protocol stack of a third device according to another embodiment of this application.
FIG. 17 is a schematic diagram of protocol stacks of various devices according to an embodiment of this application.
FIG. 18 is a schematic diagram of protocol stacks of various devices according to another embodiment of this application.
FIG. 19 is a schematic flowchart of a wireless communication method according to an embodiment of this application.
FIG. 20 is a schematic diagram of a communications apparatus according to an embodiment of this application.
FIG. 21 is a schematic diagram of a communications apparatus according to another embodiment of this application.
FIG. 22 is a schematic structural diagram of a communications apparatus according to an embodiment of this application.

### DESCRIPTION OF EMBODIMENTS

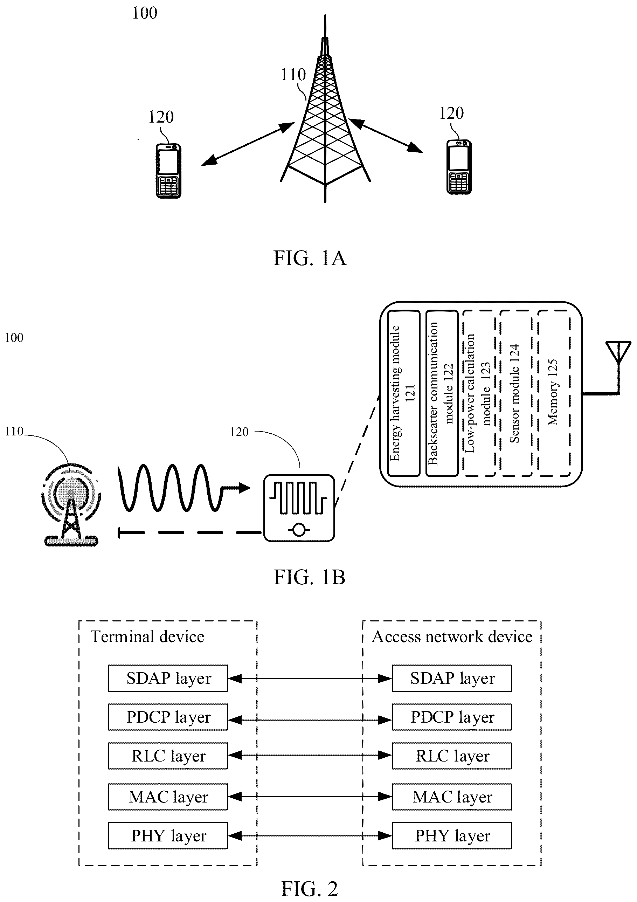

Technical solutions in this application are described below with reference to the accompanying drawings. For ease of understanding, communication processes and terms involved in embodiments of this application are described below with reference to FIG. 1 to FIG. 6.

### Wireless communications system

With reference to FIG. 1A and FIG. 1B, the following describes a wireless communications system to which embodiments of this application are applied. FIG. 1A shows an architecture of a wireless communications system 100 to which embodiments of this application are applicable. It should be understood that the technical solutions of embodiments of this application may be applied to various communications systems, such as a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a cellular internet of things, and a wireless fidelity (wireless fidelity, WIFI) system. The technical solutions provided in this application may be further applied to a future communications system, for example, a 6th generation mobile communications system.

The architecture shown in FIG. 1 includes first devices 120 and a second device 110. In some implementations, the first device may be a terminal device. In some other implementations, the second device may be a network device, a terminal device, or a relay device.

In some scenarios, it is assumed that the second device 110 may be a network device 110, the first device 120 may be a terminal device 120. The network device 110 may be a device in communication with the terminal device 120. The network device 110 may provide communication coverage for a specific geographic area, and may communicate with the terminal device 120 located within the coverage.

The terminal in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal device, a wireless communications device, a user agent, or a user apparatus. The terminal device in embodiments of this application may be a device that provides voice and/or data connectivity for a user, and may be configured to connect a person, an object, and a machine, for example, a household appliance with a wireless connection function, a sensor, and an electronic tag. The terminal in embodiments of this application may be a wireless terminal in a smart home (smart home), a wireless terminal in an IWSN, a wireless terminal in smart logistics and smart warehousing, a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), or the like.

The network device in embodiments of this application may be a device configured to communicate with the terminal device. The network device may alternatively be an access network device or a radio access network device. For example, the network device may be a base station. The network device in embodiments of this application may be a radio access network (radio access network, RAN) node (or device) that connects the terminal device to a wireless network. The base station may broadly cover the following various names, or may be replaced with the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNode MeNB, a secondary eNode SeNB, a multi-standard radio (MSR) node, a home base station, a network controller, an access node, a radio node, an access point (access point, AP), a transmission node, a transceiver node, a baseband unit (baseband unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communications, a network-side device in a 6G network, a device that functions as a base station in a future communications system, or the like. The base station may support networks of a same access technology or different access technologies. A specific technology and a specific device used by the network device are not limited in embodiments of this application.

The base station may be stationary or mobile. For example, a helicopter or an unmanned aerial vehicle may be configured to function as a mobile base station, and one or more cells may move depending on a location of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of the communications device in this application may alternatively be implemented by software functions running on hardware, or by virtualization functions instantiated on a platform (for example, a cloud platform).

In some other scenarios, the first device 120 may alternatively be a zero-power terminal. Accordingly, the second device 110 may include a device that powers a zero-power terminal. Referring to FIG. 1B, the zero-power terminal 120 may include an energy harvesting module 121. The energy harvesting module 121 is configured to harvest energy. In some implementations, energy may be harvested from a wireless power supply signal transmitted by the network device. The wireless energy supply signal may be a "radio frequency signal" transmitted by the network device. Therefore, the foregoing energy harvesting module is also referred to as a "radio frequency energy harvesting module".

In some implementations, the zero-power terminal 120 may include a backscatter communication module 122, configured to perform backscatter communication with the second device.

In some implementations, the zero-power terminal 120 may further include a low-power calculation module 123. The low-power calculation module 123 is configured to provide a calculation function, such as data processing, for the terminal.

In some implementations, the zero-power terminal 120 may further include a sensor 124 configured to collect external information (for example, an ambient temperature and ambient humidity).

In some implementations, the zero-power terminal 120 may further include a memory 125 configured to store some information (such as external information collected by using the sensor described above or an object identifier).

### Zero-power device

Communication may be performed between a first device and a second device by using a zero-power communication technology. In this case, the second device may also be referred to as a "zero-power communications device", a "zero-power device", a "zero-power communications terminal", or a "zero-power terminal".

As the name suggests, the zero-power terminal is a terminal device that consumes very little energy of the zero-power terminal, or may even consume no energy of the zero-power terminal during communication. Currently, the zero-power terminal has one or more of the following advantages.

Advantage 1: Since the zero-power terminal is not required to actively transmit a signal, the zero-power terminal does not require a complex radio frequency path to be constructed. For example, a component such as a power amplifier (power amplifier, PA) or a radio frequency filter may not be disposed in the radio frequency path, which reduces costs and a size of the terminal.

Advantage 2: Since the zero-power terminal is not required to actively generate a high-frequency signal, there is no need for a high-frequency crystal oscillator, so as to reduce costs and a size of the terminal.

Advantage 3: Since the zero-power terminal may communicate with the network device by using a backscatter technology, less energy of the terminal is consumed, or even no energy of the terminal is consumed during communication.

In the zero-power communication technology, zero-power terminals may be classified into three types depending on energy sources and energy use manners of terminals: a passive zero-power terminal, a semi-passive zero-power terminal, and an active zero-power terminal.

### 1. Passive zero-power terminal

A passive zero-power terminal generally does not require a built-in battery. When the passive zero-power terminal is close to the network device, the passive zero-power terminal falls within a near-field range formed by radiation of an antenna of the network device. In this case, an antenna of the passive zero-power terminal may generate an induced current through electromagnetic induction. The induced current may supply power to the passive zero-power terminal, to drive a low-power chip circuit of the passive zero-power terminal, so as to demodulate a forward link signal, modulate a backward link signal, and so on. For a backscatter link, the passive zero-power terminal may transmit a signal in a backscatter manner.

It may be learned from the foregoing description that, the passive zero-power terminal does not require a built-in battery to drive itself whether in a forward-link-based transmission process or a reverse-link-based transmission process, making it a true zero-power terminal.

In some implementations, the passive zero-power terminal may be an electronic tag. Accordingly, the network device may be a reader/writer in a radio frequency identification (radio frequency identification, RFID) system, and is configured to read content in the electronic tag and/or is configured to change the content in the electronic tag.

### 2. Semi-passive zero-power terminal

The semi-passive zero-power terminal is also not equipped with a conventional battery, but can harvest energy of radio waves by using an energy harvesting module (for example, an RF energy harvesting module), and may store the harvested energy in an energy storage unit (for example, a capacitor). After obtaining the energy, the energy storage unit may supply power to the zero-power terminal to drive a low-power chip circuit, demodulate a forward link signal, modulate a backward link signal, and so on. For a backscatter link, the zero-power terminal transmits a signal in a backscatter manner.

It may be learned from the foregoing description that, the semi-passive zero-power terminal does not require a built-in battery to drive itself whether in a forward-link-based transmission process or a reverse-link-based transmission process. Although the energy stored in the capacitor is used during operation, the energy comes from the radio energy harvested by using the energy harvesting module. Therefore, the semi-passive zero-power terminal is also a true zero-power terminal.

### 3. Active zero-power terminal

The active zero-power terminal may have a built-in battery. The battery may supply power to the active zero-power terminal, to drive a low-power chip circuit of the active zero-power terminal, demodulate a forward link signal, modulate a backward link signal, and so on. For a backscatter link, the active zero-power terminal transmits a signal in a backscatter manner. Therefore, zero power consumption of this type of terminal is mainly reflected in that signal transmission on the reverse link does not consume power of the terminal, but instead relies on backscatter.

The active zero-power terminal may be powered by a built-in battery. Therefore, a communication distance of the active zero-power terminal may be increased, and communication reliability may be improved. Therefore, the active zero-power terminal is applied to some scenarios in which a relatively high requirement is imposed on a communication distance and a read delay.

In some implementations, the active zero-power terminal described above may be an electronic tag, and the network device may be an RFID reader/writer. In this case, the built-in battery may supply power to an RFID chip in the electronic tag, to increase a read/write distance between the RFID reader/writer and the electronic tag. In addition, the built-in battery may supply power to the RFID chip in the electronic tag, so as to shorten a read/write delay of the RFID reader/writer for the electronic tag, thereby being conducive to improving communication reliability.

### Cellular passive internet of things

As described above, in some industries, a terminal device is generally required to have features such as relatively low costs, a relatively small size (such as an ultra-thin size), free maintenance, and a long service life. Therefore, application of battery-free and low-cost passive internet of things devices has become a key technology of cellular internet of things. The passive internet of things device may be based on the zero-power terminal described above, and may be extended based on this, so as to be applicable to the cellular internet of things. Therefore, currently, a new device, that is, an ambient-energy-based device, is introduced on a basis of a zero-power device.

### Ambient-energy-based device

In known wireless communications systems (for example, an NR system and a Wi-Fi system), an ambient-energy-based device is similar to a passive zero-power device or a semi-passive zero-power device in zero-power communication. Energy required for operation of these devices typically comes from ambient energy harvesting, with ambient energy sources including wireless signals, solar energy, thermal energy, and the like. This type of device has advantages such as being low-cost and battery-free, which may support low-cost, large-scale, and maintenance-free deployment of devices such as IoT devices. Therefore, in current standards, research is being conducted on how to support this type of device in existing wireless communications systems.

In embodiments of this application, the ambient-energy-based device described above may be referred to as an ambient IoT (ambient IoT) or AMP IoT device.

### Access layer protocol stack

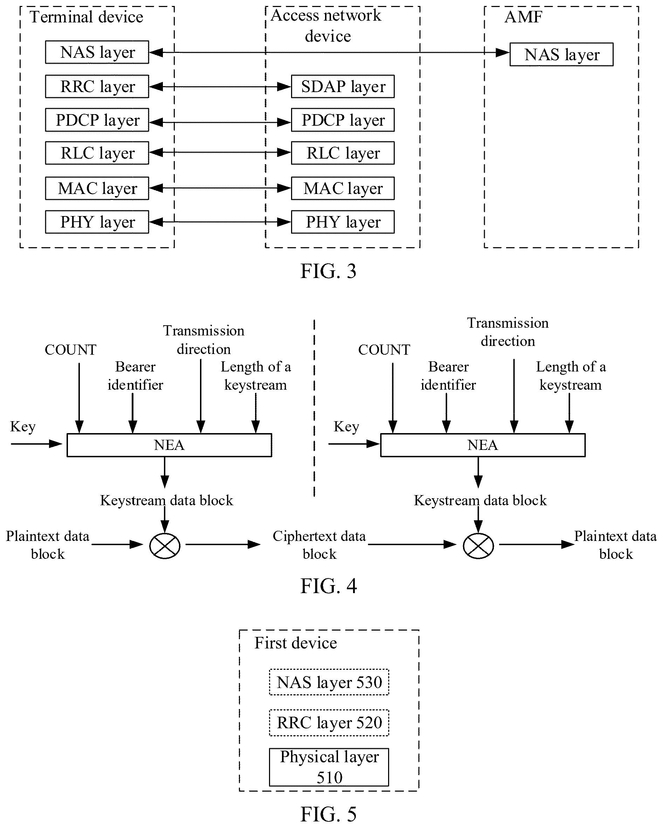

In some scenarios, conventional access layer protocol stacks may be classified into a user plane protocol stack and a control plane protocol stack. The user plane protocol stack may refer to a protocol stack used for transmitting data of a terminal device, and the control plane protocol stack may refer to a protocol stack used for transmitting control signalling. The following describes the two protocol stacks with reference to FIG. 2 and FIG. 3, respectively.

FIG. 2 is a schematic diagram of a conventional user plane protocol stack. In the user plane protocol stack shown in FIG. 2, a structure of a protocol stack between a terminal device and an access network device is similar. The structure sequentially includes, from top to bottom: a service data adaptation protocol (service data adaptation protocol, SDAP) layer, a PDCP layer, a radio link control (radio link control, RLC) layer, a medium access control (media access control, MAC) layer, and a physical (physical, PHY) layer.

The SDAP layer is used for mapping between a quality of service (Quality of Service, QoS) flow and a data radio bearer (data radio bearer, DRB).

The PDCP layer is used to implement one or more of the following functions: encryption and decryption; integrity protection; header compression and decompression; maintenance of sequence numbers by PDCP sender or receiver; PDCP service data unit (service data unit, SDU) discarding based on a timer; support for routing in the case of split bearers; duplication transmission; and reordering and in-sequence delivery.

The RLC layer is used for RLC protocol data unit (protocol data unit, PDU) data packet cutting, reassembly, error monitoring, and the like.

The MAC layer is used for mapping between a logical channel and a transport channel, multiplexing and demultiplexing, uplink and downlink scheduling related procedures, a random access procedure, and the like. In some protocols, the MAC layer is further used for a bandwidth part (bandwidth part, BWP) activation/deactivation procedure, a beam failure recovery procedure, and the like.

The physical layer provides mechanical, electrical, functional, and procedural characteristics for establishment, maintenance, and release of a physical link required for data transmission.

FIG. 3 is a schematic diagram of a conventional control plane protocol stack. In the control plane protocol stack shown in FIG. 3, a control plane protocol stack in a terminal device sequentially includes, from top to bottom: a non-access-stratum (Non-Access-Stratum, NAS) layer, a radio resource control (radio resource control, RRC) layer, a PDCP layer, an RLC layer, a MAC layer, and a PHY layer. A control plane protocol stack in an access network device sequentially includes, from top to bottom: an RRC layer, a PDCP layer, an RLC layer, a MAC layer, and a PHY layer. A control plane protocol stack in a core network device (for example, an AMF) includes a NAS layer.

The NAS layer is used to perform functions such as authentication, mobility management, and security control.

The RRC layer is used for control and management of an access network, and main functions of the RRC layer include broadcasting, paging, RRC management, radio bearer control, mobility management, QoS management, measurement reporting and measurement reporting control, radio link device monitoring and recovery, and NAS message transmission.

The PDCP layer is used to perform functions such as encryption and decryption, integrity protection, and repeated monitoring of RRC protocol data.

### Integrity protection-related algorithm

FIG. 4 is a schematic diagram of a possible integrity protection-related algorithm to which embodiments of this application are applied. Referring to FIG. 4, input parameters of an integrity protection-related algorithm may include a cryptographic key (KEY), a COUNT value, a bearer identifier, a transmission direction (direction), and a length (represented by "length") of a required keystream.

Encryption and decryption in the integrity protection-related algorithm may be performed using an NEA algorithm, which encrypts the plaintext by applying a keystream. The keystream may be, for example, applied by performing a bitwise binary addition operation between the plaintext and the keystream. Accordingly, the plaintext may be recovered by generating a same keystream using same input parameters and applying a bitwise binary addition operation to the ciphertext.

In some implementations, referring to FIG. 4, the integrity protection process described above may be understood as follows: A transmitting end may generate a keystream data block based on the input described above, encrypt a plaintext data block based on the keystream data block, to obtain a ciphertext data block, and transmit the plaintext data block to a receiving end. Accordingly, the receiving end may generate a keystream data block based on the input described above, and decrypt the received ciphertext data block based on the keystream data block, to obtain the plaintext data block.

Currently, for a first device with a relatively weak capability, the first device is required to perform communication according to functions of various protocol layers in a conventional protocol stack, which still results in relatively high communication complexity of the first device. In this case, the capability of the first device cannot match communication complexity of the first device.

For example, when the first device is a zero-power terminal or an ambient-energy-based device, the first device still performs communication according to functions of various protocol layers in a conventional protocol stack, which still results in relatively high communication complexity of the first device, consuming a significant amount of energy of the first device and failing to meet a requirement of the first device for low complexity.

Therefore, for the foregoing problem, an embodiment of this application provides a wireless communication method. In the method, a PDCP layer is no longer provided in a protocol stack of a first device, so as to reduce communication complexity of the first device. Therefore, embodiments of this application provide two new protocol stack structures. The following describes the control plane protocol stack and the user plane protocol stack with reference to Embodiment 1 and Embodiment 2, respectively.

### Embodiment 1: Control plane protocol stack of a first device

In some implementations, the control plane protocol stack of the first device may not include a MAC layer. For example, the control plane protocol stack of the first device may include a physical layer and a first protocol layer. For another example, the control plane protocol stack of the first device may include only a physical layer. This is described with reference to Embodiment 1-1 and Embodiment 1-2. In some other implementations, the control plane protocol stack of the first device may include a MAC layer, which is described below with reference to Embodiment 1-3.

In embodiments of this application, a function of each protocol layer in the control plane protocol stack is not limited. In some implementations, a function of a protocol layer in the control plane protocol stack may be the same as a function of a protocol layer in a conventional protocol stack. In some other implementations, a function of a protocol layer in the control plane protocol stack may be different from a function of a protocol layer in a conventional protocol stack. For example, the physical layer of the first device may have an integrity protection function. The following provides a detailed description in conjunction with an integrity check scheme. For brevity, details are not described herein.

In Embodiment 1-1, for example, the first protocol layer is an RRC layer. The control plane protocol stack of the first device may include a physical layer and an RRC layer.

The RRC layer is an upper layer protocol adjacent to the physical layer in the control plane protocol stack. In other words, the RRC layer is an upper protocol layer directly on the physical layer in the control plane protocol stack.

In embodiments of this application, the control plane protocol stack of the first device may include an RRC layer, which is conducive to reducing changes to a conventional protocol stack architecture while reducing complexity of the first device, so as to be compatible with a method for transmitting control signalling in a conventional solution.

It should be noted that, in embodiments of this application, a protocol layer above the RRC layer is not limited. For example, in the control plane protocol stack, a protocol layer above the RRC layer may be a NAS layer. For another example, the RRC layer in the control plane protocol stack may not have an upper protocol layer.

FIG. 5 is a schematic diagram of a control plane protocol stack of a first device according to an embodiment of this application. Referring to FIG. 5, the control plane protocol stack includes a physical layer 510, an RRC layer 520, and a NAS layer 530. In the control plane protocol stack, the RRC layer 520 may be located above the physical layer 510 as an upper protocol layer adjacent to the physical layer 510. The NAS layer 530 may be located above the RRC layer 520 as an upper protocol layer adjacent to the RRC layer 520.

In Embodiment 1-2, the control plane protocol stack of the first device may include only a physical layer.

In embodiments of this application, only a physical layer is provided in the control plane protocol stack of the first device, which is conducive to minimizing complexity of the first device. Still referring to FIG. 5, the control plane protocol stack includes the physical layer 510. In this case, dashed lines corresponding to the RRC layer 520 and the NAS layer 530 indicate that the control plane protocol stack does not include the RRC layer 520 and the NAS layer 530.

In Embodiment 1-3, for example, the first protocol layer is a MAC layer. The control plane protocol stack of the first device may include a physical layer and a MAC layer.

The MAC layer is an upper layer protocol adjacent to the physical layer in the control plane protocol stack. In other words, the MAC layer is an upper protocol layer directly on the physical layer in the control plane protocol stack.

In embodiments of this application, the control plane protocol stack of the first device may include a MAC layer, which is conducive to reducing changes to a conventional protocol stack architecture while reducing complexity of the first device, so as to be compatible with a method for transmitting control signalling in a conventional solution.

It should be noted that, in embodiments of this application, a protocol layer above the MAC layer is not limited. For example, in the control plane protocol stack, a protocol layer above the MAC layer may be an RRC layer. For another example, the MAC layer in the control plane protocol stack may not have an upper protocol layer.

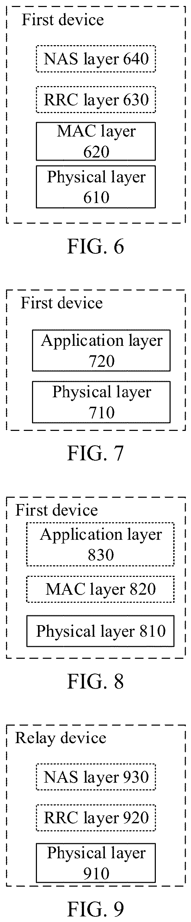

FIG. 6 is a schematic diagram of a control plane protocol stack of a first device according to another embodiment of this application. Referring to FIG. 6, the control plane protocol stack includes a physical layer 610, a MAC layer 620, an RRC layer 630, and a NAS layer 640. In the control plane protocol stack, the MAC layer 620 may be located above the physical layer 610 as an upper protocol layer adjacent to the physical layer 610. The RRC layer 630 may be located above the MAC layer 620 as an upper protocol layer adjacent to the MAC layer 620. The NAS layer 640 may be located above the RRC layer 630 as an upper protocol layer adjacent to the RRC layer 830.

Still referring to FIG. 6, the control plane protocol stack may include only the physical layer 610 and the MAC layer 620. In the control plane protocol stack, the MAC layer 620 may be located above the physical layer 610 as an upper protocol layer adjacent to the physical layer 610. In this case, dashed lines corresponding to the RRC layer 630 and the NAS layer 640 indicate that the control plane protocol stack does not include the RRC layer 630 and the NAS layer 640.

### Embodiment 2: User plane protocol stack of a first device

In some implementations, the user plane protocol stack of the first device may include a MAC layer. For example, the user plane protocol stack of the first device may include a physical layer and a first protocol layer. This is described below with reference to Embodiment 2-1. In some other implementations, the user plane protocol stack of the first device may include a MAC layer, which is described below with reference to Embodiment 2-2.

In embodiments of this application, a function of each protocol layer in the user plane protocol stack is not limited. In some implementations, a function of a protocol layer in the user plane protocol stack may be the same as a function of a protocol layer in a conventional protocol stack. In some other implementations, a function of a protocol layer in the user plane protocol stack may be different from a function of a protocol layer in a conventional protocol stack. For example, the physical layer of the first device may have an integrity protection function. The following provides a detailed description in conjunction with an integrity check scheme in embodiments of this application. For brevity, details are not described herein.

In Embodiment 2-1, for example, the first protocol layer is an application layer. The user plane protocol stack of the first device may include a physical layer and an application layer.

The application layer is an upper layer protocol adjacent to the physical layer in the user plane protocol stack. In other words, the application layer is an upper protocol layer directly on the physical layer in the user plane protocol stack.

In embodiments of this application, the user plane protocol stack of the first device may include an application layer, which is conducive to minimizing complexity of the first device.

FIG. 7 is a schematic diagram of a user plane protocol stack of a first device according to an embodiment of this application. Referring to FIG. 7, the user plane protocol stack includes a physical layer 710 and an application layer 720. In the user plane protocol stack, the application layer 720 may be located above the physical layer 710 as an upper protocol layer adjacent to the physical layer 710.

In Embodiment 2-2, for example, the first protocol layer is a MAC layer. The user plane protocol stack of the first device may include a physical layer and a MAC layer.

The MAC layer is an upper layer protocol adjacent to the physical layer in the user plane protocol stack. In other words, the MAC layer is an upper protocol layer directly on the physical layer in the user plane protocol stack.

In embodiments of this application, the user plane protocol stack of the first device may include a MAC layer, which is conducive to reducing changes to a conventional protocol stack architecture while reducing complexity of the first device, so as to be compatible with a method for transmitting user data in a conventional solution.

It should be noted that, in embodiments of this application, a protocol layer above the MAC layer is not limited. For example, in the user plane protocol stack, a protocol layer above the MAC layer may be an application layer. For another example, the MAC layer in the user plane protocol stack may not have an upper protocol layer.

FIG. 8 is a schematic diagram of a user plane protocol stack of a first device according to another embodiment of this application. Referring to FIG. 8, the user plane protocol stack includes a physical layer 810, a MAC layer 820, and an application layer 830. In the user plane protocol stack, the MAC layer 820 may be located above the physical layer 810 as an upper protocol layer adjacent to the physical layer 810. The application layer 830 may be located above the MAC layer 820 as an upper protocol layer adjacent to the MAC layer 820.

In embodiments of this application, the user plane protocol stack and the control plane protocol stack of the first device may be used separately or in combination. In a case in which the foregoing two protocol stacks are used in combination, a specific combination manner is not limited in embodiments of this application. For example, if the user plane protocol stack of the first device is as described in Embodiment 2-1, the control plane protocol stack of the first device may be as described in Embodiment 1-1. For another example, if the user plane protocol stack of the first device is as described in Embodiment 2-1, the control plane protocol stack of the first device may be as described in Embodiment 1-2. For another example, if the user plane protocol stack of the first device is as described in Embodiment 2-2, the control plane protocol stack of the first device may be as described in Embodiment 1-3.

In some scenarios, the first device may transmit signalling and/or user data to a third device by using a relay device (as an example of the second device). For example, the first device is a zero-power terminal, and the relay device may be a reader. To match the protocol stack of the first device, in embodiments of this application, a protocol stack of the relay device may be modified. The following describes the user plane protocol stack and the control plane protocol stack of the relay device in embodiments of this application with reference to Embodiment 3 and Embodiment 4, respectively.

It should be noted that, in embodiments of this application, the protocol stack (including the user plane protocol stack and/or the control plane protocol stack) of the relay device may alternatively have a conventional protocol stack structure.

### Embodiment 3: Control plane protocol stack of a relay device

In some implementations, the control plane protocol stack of the relay device may not include a MAC layer. For example, the control plane protocol stack of the relay device may include a physical layer and a second protocol layer. For another example, the control plane protocol stack of the relay device may include only a physical layer, which is described below with reference to Embodiment 3-1 and Embodiment 3-2. In some other implementations, the control plane protocol stack of the relay device may include a MAC layer, which is described below with reference to Embodiment 3-3.

In embodiments of this application, a function of each protocol layer in the control plane protocol stack is not limited. In some implementations, a function of a protocol layer in the control plane protocol stack may be the same as a function of a protocol layer in a conventional protocol stack. In some other implementations, a function of a protocol layer in the control plane protocol stack may be different from a function of a protocol layer in a conventional protocol stack. For example, the physical layer of the relay device may have an integrity protection function. The following provides a detailed description in conjunction with an integrity check scheme in embodiments of this application. For brevity, details are not described herein.

In Embodiment 3-1, for example, the second protocol layer is an RRC layer. The control plane protocol stack of the relay device may include a physical layer and an RRC layer.

The RRC layer is an upper layer protocol adjacent to the physical layer in the control plane protocol stack. In other words, the RRC layer is an upper protocol layer directly on the physical layer in the control plane protocol stack.

In embodiments of this application, the control plane protocol stack of the relay device may include an RRC layer, which is conducive to reducing changes to a conventional protocol stack architecture while reducing complexity of the relay device, so as to be compatible with a method for transmitting control signalling in a conventional solution.

It should be noted that, in embodiments of this application, a protocol layer above the RRC layer is not limited. For example, in the control plane protocol stack, a protocol layer above the RRC layer may be a NAS layer. For another example, the RRC layer in the control plane protocol stack may not have an upper protocol layer.

FIG. 9 is a schematic diagram of a control plane protocol stack of a relay device according to an embodiment of this application. Referring to FIG. 9, the control plane protocol stack includes a physical layer 910, an RRC layer 920, and a NAS layer 930. In the control plane protocol stack, the RRC layer 920 may be located above the physical layer 910 as an upper protocol layer adjacent to the physical layer 910. The NAS layer 930 may be located above the RRC layer 920 as an upper protocol layer adjacent to the RRC layer 920.

It should be noted that, in embodiments of this application, the relay device may include a plurality of protocol stacks, which are respectively used for communication with the first device and/or the third device (such as an access network device and a core network device). Some or all of the plurality of protocol stacks may be as shown in FIG. 9. For brevity, details are not described herein again.

In Embodiment 3-2, the control plane protocol stack of the relay device may include only a physical layer.

In embodiments of this application, only a physical layer is provided in the control plane protocol stack of the relay device, which is conducive to minimizing complexity of the relay device. Still referring to FIG. 9, the control plane protocol stack includes the physical layer 910. In this case, dashed lines corresponding to the RRC layer 920 and the NAS layer 930 indicate that the control plane protocol stack does not include the RRC layer 920 and the NAS layer 930.

It should be noted that, in embodiments of this application, the relay device may include a plurality of protocol stacks, which are respectively used for communication with the first device and/or the third device (such as an access network device and a core network device). Some or all of the plurality of protocol stacks may be as shown in FIG. 9. For brevity, details are not described herein again.

In Embodiment 3-3, for example, the second protocol layer is a MAC layer. The control plane protocol stack of the relay device may include a physical layer and a MAC layer.

The MAC layer is an upper layer protocol adjacent to the physical layer in the control plane protocol stack. In other words, the MAC layer is an upper protocol layer directly on the physical layer in the control plane protocol stack.

In embodiments of this application, the control plane protocol stack of the relay device may include a MAC layer, which is conducive to reducing changes to a conventional protocol stack architecture while reducing complexity of the relay device, so as to be compatible with a method for transmitting control signalling in a conventional solution.

It should be noted that, in embodiments of this application, a protocol layer above the MAC layer is not limited. For example, in the control plane protocol stack, a protocol layer above the MAC layer may be an RRC layer. For another example, the MAC layer in the control plane protocol stack may not have an upper protocol layer.

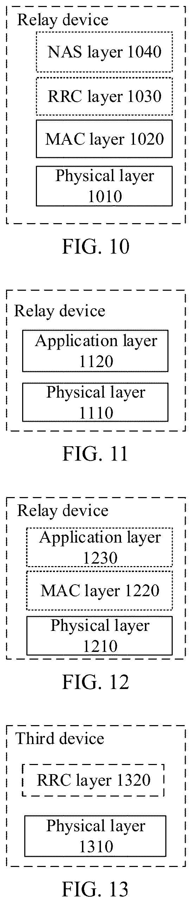

FIG. 10 is a schematic diagram of a control plane protocol stack of a relay device according to another embodiment of this application. Referring to FIG. 10, the control plane protocol stack includes a physical layer 1010, a MAC layer 1020, an RRC layer 1030, and a NAS layer 1040. In the control plane protocol stack, the MAC layer 1020 may be located above the physical layer 1010 as an upper protocol layer adjacent to the physical layer 1010. The RRC layer 1030 may be located above the MAC layer 1020 as an upper protocol layer adjacent to the MAC layer 1020. The NAS layer 1040 may be located above the RRC layer 1030 as an upper protocol layer adjacent to the RRC layer 1030.

Still referring to FIG. 10, the control plane protocol stack may include only the physical layer 1010 and the MAC layer 1020. In the control plane protocol stack, the MAC layer 1020 may be located above the physical layer 1010 as an upper protocol layer adjacent to the physical layer 1010. In this case, dashed lines corresponding to the RRC layer 1030 and the NAS layer 1040 indicate that the control plane protocol stack does not include the RRC layer 1030 and the NAS layer 1040.

It should be noted that, in embodiments of this application, the relay device may include a plurality of protocol stacks, which are respectively used for communication with the first device and/or the third device (such as an access network device and a core network device). Some or all of the plurality of protocol stacks may be as shown in FIG. 10. For brevity, details are not described herein again.

### Embodiment 4: User plane protocol stack of a relay device

In some implementations, the user plane protocol stack of the relay device may include a MAC layer. For example, the user plane protocol stack of the relay device may include a physical layer and a second protocol layer. This is described below with reference to Embodiment 4-1. In some other implementations, the user plane protocol stack of the relay device may include a MAC layer, which is described below with reference to Embodiment 4-2.

In embodiments of this application, a function of each protocol layer in the user plane protocol stack is not limited. In some implementations, a function of a protocol layer in the user plane protocol stack may be the same as a function of a protocol layer in a conventional protocol stack. In some other implementations, a function of a protocol layer in the user plane protocol stack may be different from a function of a protocol layer in a conventional protocol stack. For example, the physical layer of the relay device may have an integrity protection function. The following provides a detailed description in conjunction with an integrity check scheme in embodiments of this application. For brevity, details are not described herein again.

In Embodiment 4-1, for example, the second protocol layer is an application layer. The user plane protocol stack of the relay device may include a physical layer and an application layer.

The application layer is an upper layer protocol adjacent to the physical layer in the user plane protocol stack. In other words, the application layer is an upper protocol layer directly on the physical layer in the user plane protocol stack.

In embodiments of this application, the user plane protocol stack of the relay device may include an application layer, which is conducive to minimizing complexity of the relay device.

FIG. 11 is a schematic diagram of a user plane protocol stack of a relay device according to an embodiment of this application. Referring to FIG. 11, the user plane protocol stack includes a physical layer 1110 and an application layer 1120. In the user plane protocol stack, the application layer 1120 may be located above the physical layer 1110 as an upper protocol layer adjacent to the physical layer 1110.

It should be noted that, in embodiments of this application, the relay device may include a plurality of protocol stacks, which are respectively used for communication with the first device and/or the third device (such as an access network device and a core network device). Some or all of the plurality of protocol stacks may be as shown in FIG. 11. For brevity, details are not described herein again.

In Embodiment 4-2, for example, the second protocol layer is a MAC layer. The user plane protocol stack of the relay device may include a physical layer and a MAC layer.

The MAC layer is an upper layer protocol adjacent to the physical layer in the user plane protocol stack. In other words, the MAC layer is an upper protocol layer directly on the physical layer in the user plane protocol stack.

In embodiments of this application, the user plane protocol stack of the relay device may include a MAC layer, which is conducive to reducing changes to a conventional protocol stack architecture while reducing complexity of the relay device, so as to be compatible with a method for transmitting user data in a conventional solution.

It should be noted that, in embodiments of this application, a protocol layer above the MAC layer is not limited. For example, in the user plane protocol stack, a protocol layer above the MAC layer may be an application layer. For another example, the MAC layer in the user plane protocol stack may not have an upper protocol layer.

FIG. 12 is a schematic diagram of a user plane protocol stack of a relay device according to another embodiment of this application. Referring to FIG. 12, the user plane protocol stack includes a physical layer 1210, a MAC layer 1220, and an application layer 1230. In the user plane protocol stack, the MAC layer 1220 may be located above the physical layer 1210 as an upper protocol layer adjacent to the physical layer 1210. The application layer 1230 may be located above the MAC layer 1220 as an upper protocol layer adjacent to the MAC layer 1220.

It should be noted that, in embodiments of this application, the relay device may include a plurality of protocol stacks, which are respectively used for communication with the first device and/or the third device (such as an access network device and a core network device). Some or all of the plurality of protocol stacks may be as shown in FIG. 12. For brevity, details are not described herein again.

In embodiments of this application, the user plane protocol stack and the control plane protocol stack of the relay device may be used separately or in combination. In a case in which the foregoing two protocol stacks are used in combination, a specific combination manner is not limited in embodiments of this application. For example, if the user plane protocol stack of the relay device is as described in Embodiment 4-1, the control plane protocol stack of the relay device may be as described in Embodiment 3-1. For another example, if the user plane protocol stack of the relay device is as described in Embodiment 4-1, the control plane protocol stack of the relay device may be as described in Embodiment 3-2. For another example, if the user plane protocol stack of the relay device is as described in Embodiment 4-2, the control plane protocol stack of the relay device may be as described in Embodiment 3-3.

As described above, the first device may communicate with the third device by using the relay device, or the first device may directly communicate with the third device. To match the protocol stack of the first device, in embodiments of this application, a protocol stack of the third device may be modified. The following describes a user plane protocol stack and a control plane protocol stack of the third device in embodiments of this application with reference to Embodiment 5 and Embodiment 6, respectively.

The foregoing third device may include a network device. In some implementations, the third device may include a core network device. For example, the third device may be an AMF. For another example, the third device may be an application server. In some other implementations, the third device may include an access network device.

It should be noted that, in embodiments of this application, the protocol stack (including the user plane protocol stack and/or the control plane protocol stack) of the third device may alternatively have a conventional protocol stack structure.

### Embodiment 5: Control plane protocol stack of a third device

In some implementations, the control plane protocol stack of the third device may not include a MAC layer. For example, the control plane protocol stack of the third device may include a physical layer and a second protocol layer. For another example, the control plane protocol stack of the third device may include only a physical layer, which is described below with reference to Embodiment 5-1 and Embodiment 5-2. In some other implementations, the control plane protocol stack of the third device may include a MAC layer, which is described below with reference to Embodiment 5-3.

In embodiments of this application, a function of each protocol layer in the control plane protocol stack is not limited. In some implementations, a function of a protocol layer in the control plane protocol stack may be the same as a function of a protocol layer in a conventional protocol stack. In some other implementations, a function of a protocol layer in the control plane protocol stack may be different from a function of a protocol layer in a conventional protocol stack. For example, the physical layer of the third device may have an integrity protection function. The following provides a detailed description in conjunction with an integrity check scheme in embodiments of this application. For brevity, details are not described herein again.

In Embodiment 5-1, for example, the second protocol layer is an RRC layer. The control plane protocol stack of the third device may include a physical layer and an RRC layer.

The RRC layer is an upper layer protocol adjacent to the physical layer in the control plane protocol stack. In other words, the RRC layer is an upper protocol layer directly on the physical layer in the control plane protocol stack.

In embodiments of this application, the control plane protocol stack of the third device may include an RRC layer, which is conducive to reducing changes to a conventional protocol stack architecture while reducing complexity of the third device, so as to be compatible with a method for transmitting control signalling in a conventional solution.

It should be noted that, in embodiments of this application, a protocol layer above the RRC layer is not limited. In some implementations, a protocol layer above the RRC layer in the control plane protocol stack may be a NAS layer. In some other implementations, the RRC layer in the control plane protocol stack may not have an upper protocol layer.

FIG. 13 is a schematic diagram of a control plane protocol stack of a third device according to an embodiment of this application. Referring to FIG. 13, the control plane protocol stack includes a physical layer 1310 and an RRC layer 1320. In the control plane protocol stack, the RRC layer 1320 may be located above the physical layer 1310 as an upper protocol layer adjacent to the physical layer 1310.

In Embodiment 5-2, the control plane protocol stack of the third device may include only a physical layer.

Still referring to FIG. 13, the control plane protocol stack of the third device includes the physical layer 1310. In this case, a dashed line corresponding to the RRC layer 1320 indicates that the control plane protocol stack does not include the RRC layer 1320.

In Embodiment 5-3, for example, the second protocol layer is a MAC layer. The control plane protocol stack of the third device may include a physical layer and a MAC layer.

The MAC layer is an upper layer protocol adjacent to the physical layer in the control plane protocol stack. In other words, the MAC layer is an upper protocol layer directly on the physical layer in the control plane protocol stack.

In embodiments of this application, the control plane protocol stack of the third device may include a MAC layer, which is conducive to reducing changes to a conventional protocol stack architecture, so as to be compatible with a method for transmitting control signalling in a conventional solution.

It should be noted that, in embodiments of this application, a protocol layer above the MAC layer is not limited. For example, in the control plane protocol stack, a protocol layer above the MAC layer may be an RRC layer. For another example, the MAC layer in the control plane protocol stack may not have an upper protocol layer.

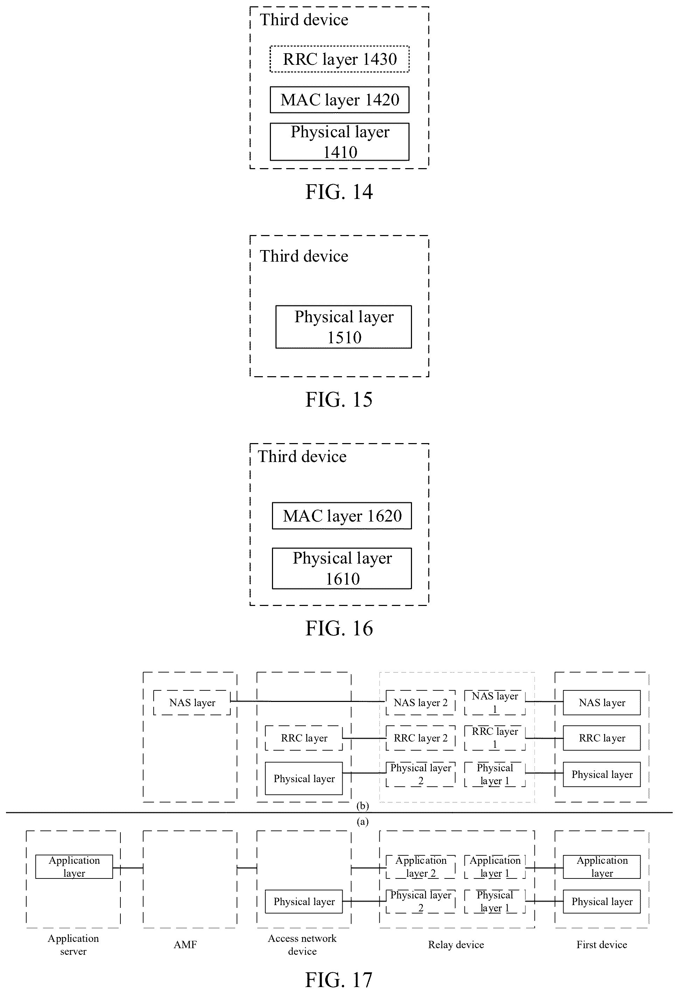

FIG. 14 is a schematic diagram of a control plane protocol stack of a third device according to another embodiment of this application. Referring to FIG. 14, the control plane protocol stack includes a physical layer 1410, a MAC layer 1420, and an RRC layer 1430. In the control plane protocol stack, the MAC layer 1420 may be located above the physical layer 1410 as an upper protocol layer adjacent to the physical layer 1410. The RRC layer 1430 may be located above the MAC layer 1420 as an upper protocol layer adjacent to the MAC layer 1420.

Still referring to FIG. 14, the control plane protocol stack may include only the physical layer 1410 and the MAC layer 1420. In the control plane protocol stack, the MAC layer 1420 may be located above the physical layer 1410 as an upper protocol layer adjacent to the physical layer 1410. In this case, a dashed line corresponding to the RRC layer 1430 indicates that the control plane protocol stack does not include the RRC layer 1430.

In some scenarios, the protocol stack of the third device may include only a NAS layer. For example, the third device is a core network device (for example, an AMF), and the protocol stack of the third device may include only the NAS layer. The following provides a detailed description with reference to figures. For brevity, details are not described herein.

### Embodiment 6: User plane protocol stack of a third device

In some implementations, the user plane protocol stack of the third device may not include a MAC layer. For example, the user plane protocol stack of the third device may include a physical layer and a MAC layer. This is described below with reference to Embodiment 6-1. In some other implementations, the user plane protocol stack of the third device may include a MAC layer, which is described below with reference to Embodiment 6-2.

In embodiments of this application, a function of each protocol layer in the user plane protocol stack is not limited. In some implementations, a function of a protocol layer in the user plane protocol stack may be the same as a function of a protocol layer in a conventional protocol stack. In some other implementations, a function of a protocol layer in the user plane protocol stack may be different from a function of a protocol layer in a conventional protocol stack. For example, the physical layer of the third device may have an integrity protection function. The following provides a detailed description in conjunction with an integrity check scheme in embodiments of this application. For brevity, details are not described herein.

In Embodiment 6-1, the user plane protocol stack of the third device may include only a physical layer.

FIG. 15 is a schematic diagram of a user plane protocol stack of a third device according to an embodiment of this application. Referring to FIG. 15, the user plane protocol stack includes a physical layer 1510.

In Embodiment 6-2, the user plane protocol stack of the third device may include a physical layer and a MAC layer.

The MAC layer is an upper layer protocol adjacent to the physical layer in the user plane protocol stack. In other words, the MAC layer is an upper protocol layer directly on the physical layer in the user plane protocol stack.

In embodiments of this application, the user plane protocol stack of the third device may include a MAC layer, which is conducive to reducing changes to a conventional protocol stack architecture while reducing complexity of the third device, so as to be compatible with a method for transmitting user data in a conventional solution.

It should be noted that, in embodiments of this application, a protocol layer above the MAC layer is not limited. For example, in the user plane protocol stack, a protocol layer above the MAC layer may be an application layer. For another example, the MAC layer in the user plane protocol stack may not have an upper protocol layer.

FIG. 16 is a schematic diagram of a user plane protocol stack of a third device according to another embodiment of this application. Referring to FIG. 16, the user plane protocol stack includes a physical layer 1610 and a MAC layer 1620. In the user plane protocol stack, the MAC layer 1620 may be located above the physical layer 1610 as an upper protocol layer adjacent to the physical layer 1610.

In embodiments of this application, the user plane protocol stack and the control plane protocol stack of the third device may be used separately or in combination. In a case in which the foregoing two protocol stacks are used in combination, a specific combination manner is not limited in embodiments of this application. For example, if the user plane protocol stack of the third device is as described in Embodiment 6-1, the control plane protocol stack of the third device may be as described in Embodiment 5-1. For another example, if the user plane protocol stack of the third device is as described in Embodiment 6-1, the control plane protocol stack of the third device may be as described in Embodiment 5-2. For another example, if the user plane protocol stack of the third device is as described in Embodiment 6-1, the control plane protocol stack of the third device may be as described in Embodiment 5-3.

In some scenarios, the protocol stack of the third device may include only an application layer. For example, the third device is a core network device (for example, an application server), and the protocol stack of the third device may include only an application layer. The following provides a detailed description with reference to figures. For brevity, details are not described herein.

The user plane protocol stack and the control plane protocol stack corresponding to each of the first device, the relay device, and the third device in embodiments of this application are described above. For ease of understanding, the following describes protocol stacks of devices in embodiments of this application by using an example in which the third device includes an access network device, an AMF, and an application server.

FIG. 17 is a schematic diagram of protocol stacks of various devices according to an embodiment of this application. The following first describes user plane protocol stacks of the various devices with reference to FIG. 17(a).

Referring to FIG. 17(a), the user plane protocol stack of the first device may include a physical layer and an application layer, where the application layer is a protocol layer located above and adjacent to the physical layer in the user plane protocol stack. The user plane protocol stack of the relay device may include a physical layer 1, an application layer 1, a physical layer 2, and an application layer 2. The application layer 1 is a protocol layer located above and adjacent to the physical layer 1 in the user plane protocol stack, and the application layer 2 is a protocol layer located above and adjacent to the physical layer 2 in the user plane protocol stack. In addition, the application layer 1 and the physical layer 1 are used for performing communication with the first device, and the application layer 2 and the physical layer 2 are used for performing communication with the access network device and/or the application server. The user plane protocol stack of the access network device may include only a physical layer, and the user plane protocol stack of the application server may include only an application layer.

Referring to FIG. 17(b), the control plane protocol stack of the first device may include a physical layer, an RRC layer, and a NAS layer, where the RRC layer is a protocol layer located above and adjacent to the physical layer in the control plane protocol stack, and the NAS layer is a protocol layer located above and adjacent to the RRC layer in the control plane protocol stack. The control plane protocol stack of the relay device may include a physical layer 1, an RRC layer 1, a NAS layer 1, a physical layer 2, an RRC layer 2, and a NAS layer 2. The RRC layer 1 is a protocol layer located above and adjacent to the physical layer 1 in the control plane protocol stack, and the NAS layer 1 is a protocol layer located above and adjacent to the RRC layer 1 in the control plane protocol stack. The RRC layer 2 is a protocol layer located above and adjacent to the physical layer 2 in the control plane protocol stack, and the NAS layer 2 is a protocol layer located above and adjacent to the RRC layer 2 in the control plane protocol stack. In addition, the NAS layer 1, the RRC layer 1, and the physical layer 1 are used for performing communication with the first device, and the NAS layer 2, the RRC layer 2, and the physical layer 2 are used for performing communication with the access network device and/or the AMF. The control plane protocol stack of the access network device may include a physical layer and an RRC layer, where the RRC layer is a protocol layer located above and adjacent to the physical layer in the control plane protocol stack. The control plane protocol stack of the AMF may include only a NAS layer.

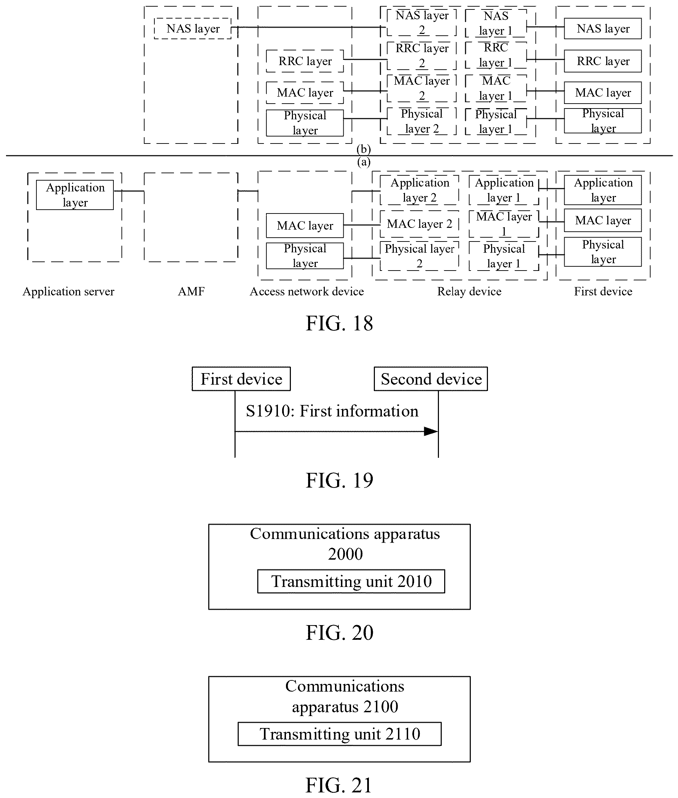

FIG. 18 is a schematic diagram of protocol stacks of various devices according to another embodiment of this application. The following first describes user plane protocol stacks of the various devices with reference to FIG. 17(a).

Referring to FIG. 18(a), the user plane protocol stack of the first device may include a physical layer, a MAC layer, and an application layer, where the MAC layer is a protocol layer located above and adjacent to the physical layer in the user plane protocol stack, and the application layer is a protocol layer located above and adjacent to the MAC layer in the user plane protocol stack. The user plane protocol stack of the relay device may include a physical layer 1, a MAC layer 1, an application layer 1, a physical layer 2, a MAC layer 2, and an application layer 2. The MAC layer 1 is a protocol layer located above and adjacent to the physical layer 1 in the user plane protocol stack, and the application layer 1 is a protocol layer located above and adjacent to the MAC layer 1 in the user plane protocol stack. The MAC layer 2 is a protocol layer located above and adjacent to the physical layer 2 in the user plane protocol stack, and the application layer 2 is a protocol layer located above and adjacent to the MAC layer 2 in the user plane protocol stack. In addition, the application layer 1, the MAC layer 1, and the physical layer 1 are used for performing communication with the first device, and the application layer 2, the MAC layer 2, and the physical layer 2 are used for performing communication with the access network device and/or the application server. The user plane protocol stack of the access network device may include only a physical layer and a MAC layer, and the user plane protocol stack of the application server may include only an application layer.

Referring to FIG. 18(b), the control plane protocol stack of the first device may include a physical layer, a MAC layer, an RRC layer, and a NAS layer, where the MAC layer is a protocol layer located above and adjacent to the physical layer in the control plane protocol stack, the RRC layer is a protocol layer located above and adjacent to the MAC layer in the control plane protocol stack, and the NAS layer is a protocol layer located above and adjacent to the RRC layer in the control plane protocol stack. The control plane protocol stack of the relay device may include a physical layer 1, a MAC layer 1, an RRC layer 1, a NAS layer 1, a physical layer 2, a MAC layer 2, an RRC layer 2, and a NAS layer 2. The MAC layer 1 is a protocol layer located above and adjacent to the physical layer 1 in the control plane protocol stack, the RRC layer 1 is a protocol layer located above and adjacent to the MAC layer 1 in the control plane protocol stack, and the NAS layer 1 is a protocol layer located above and adjacent to the RRC layer 1 in the control plane protocol stack. The MAC layer 2 is a protocol layer located above and adjacent to the physical layer 2 in the control plane protocol stack, the RRC layer 2 is a protocol layer located above and adjacent to the MAC layer 2 in the control plane protocol stack, and the NAS layer 2 is a protocol layer located above and adjacent to the RRC layer 2 in the control plane protocol stack. In addition, the NAS layer 1, the RRC layer 1, the MAC layer 1, and the physical layer 1 are used for performing communication with the first device, and the NAS layer 2, the RRC layer 2, the MAC layer 2, and the physical layer 2 are used for performing communication with the access network device and/or the AMF. The control plane protocol stack of the access network device may include a physical layer, a MAC layer, and an RRC layer, where the MAC layer is a protocol layer located above and adjacent to the physical layer in the control plane protocol stack, and the RRC layer is a protocol layer located above and adjacent to the MAC layer in the control plane protocol stack. The control plane protocol stack of the AMF may include only a NAS layer.

It should be noted that, in the protocol stacks shown in FIG. 17 and/or FIG. 18, a dashed line corresponding to a protocol layer may indicate that the protocol layer may exist or may not exist. The relay device is used as an example. In the protocol stacks shown in FIG. 17 and/or FIG. 18, protocol layers corresponding to the relay device are all represented by dashed lines. It may be understood that the relay device may not exist. In this case, the first device may directly communicate with another network element (for example, an access network device and/or an AMF). Certainly, when the relay device exists, the first device may communicate with another network element via the relay device.

It may be learned from the foregoing description that, in a conventional protocol stack, a PDCP layer is used to implement an integrity protection function, an integrity check function, an encryption function, and a decryption function. Some or all of the foregoing functions are crucial to communication security and accuracy. If the foregoing functions of the PDCP layer are directly removed, communication security and accuracy are greatly reduced.

Therefore, in view of the foregoing problem, an embodiment of this application further provides a scheme of performing integrity protection. In some implementations, if the first device is provided with a physical layer, the first device may perform integrity protection on to-be-transmitted second information at the physical layer.

The second information is not limited in embodiments of this application. For example, the second information may be data to be transmitted by the first device. For another example, the second information may alternatively be control signalling to be transmitted by the first device.

For example, the first device may obtain the COUNT value at the physical layer based on an SN in combination with a locally maintained hyper frame number (hyper frame number, HFN). Then, the first device calculates an integrity protection check bit MAC-I at least based on the COUNT value and a bearer identifier (bearer ID) of the first device, to obtain a cyclic redundancy check (cyclic redundancy check, CRC) portion. Subsequently, the first device performs a channel encoding operation.

In embodiments of this application, the foregoing scheme of performing integrity protection at the physical layer may be used in combination with any one of the protocol stacks described above that includes a physical layer. For example, the foregoing scheme of performing integrity protection at the physical layer may be used in combination with the protocol stacks described in Embodiment 3-1 to Embodiment 3-3. Certainly, the foregoing scheme of performing integrity protection may alternatively be used in combination with a conventional protocol stack.

In embodiments of this application, in a case in which the first device is not provided with a PDCP layer, integrity protection may be performed on the second information at the physical layer of the first device, which is conducive to improving accuracy of transmitting the second information.

For a receiving end, in some implementations, the integrity check function may also be performed at the physical layer. That is, the second device receives the second information transmitted by the first device. The second device performs an integrity check on the second information at the physical layer.

For example, the second device may first perform a channel decoding operation, and then obtain the COUNT value at the physical layer based on an SN in combination with a locally maintained HFN. Then, the second device calculates an integrity protection check bit MAC-I at least based on the COUNT value and a bearer identifier (bearer ID) of the first device, to perform a CRC portion based on this.

In some other implementations, if the first device is provided with a MAC layer, the first device may perform integrity protection on to-be-transmitted second information at the MAC layer.

The second information is not limited in embodiments of this application. For example, the second information may be data to be transmitted by the first device. For another example, the second information may alternatively be control signalling to be transmitted by the first device.

For example, the first device may obtain the COUNT value at the MAC layer based on an SN in combination with a locally maintained HFN. Then, the first device calculates an integrity protection check bit MAC-I based on the COUNT value and a bearer identifier (bearer ID) of the first device, to obtain a CRC portion. Subsequently, the first device performs a channel encoding operation.

In embodiments of this application, the foregoing scheme of performing integrity protection at the MAC layer may be used in combination with any one of the protocol stacks described above that includes a MAC layer. For example, the foregoing scheme of performing integrity protection at the MAC layer may be used in combination with the protocol stack described in Embodiment 3-3. Certainly, the foregoing scheme of performing integrity protection may alternatively be used in combination with a conventional protocol stack.

In embodiments of this application, in a case in which the first device is not provided with a PDCP layer, integrity protection may be performed on the second information at the MAC layer of the first device, which is conducive to improving accuracy of transmitting the second information.

For a receiving end, in some implementations, the integrity check function may also be performed at the MAC layer. For example, the second device receives the second information transmitted by the first device. The second device performs an integrity check on the second information at the MAC layer.

For example, the second device may obtain the COUNT value at the MAC layer based on an SN in combination with a locally maintained HFN. Then, the second device calculates an integrity protection check bit MAC-I based on the COUNT value and a bearer identifier (bearer ID) of the first device, to perform a CRC portion based on this.

As described above, in a process in which the first device performs integrity protection and/or the second device performs an integrity check, both the integrity protection and the integrity check are required to be performed based on the first information, where the first information is associated with an integrity protection function and/or an integrity check function. In a process of performing communication based on a conventional protocol stack, the first information may be carried in a PDCP PDU. However, in embodiments of this application, since the protocol stack of the first device does not include the PDCP layer, transmission of the first information is an urgent problem to be resolved.

Therefore, in view of the foregoing problem, an embodiment of this application further provides a scheme of transmitting the first information. For ease of understanding, the following describes a wireless communication method according to an embodiment of this application with reference to FIG. 19. The method shown in FIG. 19 includes step S1910.

In step S1910, a first device transmits first information to a second device.

In some implementations, the first information may include one or more of the following: SN information, bearer information of the first device, or information used for integrity check.

For example, the first information includes the SN information. The SN information is used to determine an SN. In embodiments of this application, the SN is used to calculate a COUNT value.

For example, the first information includes the bearer information of the first device. The bearer information of the first device is used to indicate a bearer of the first device. In other words, the bearer information of the first device is used to indicate a bearer for transmitting second information. For example, the bearer information of the first device may include a bearer identifier.

For example, the first information includes the information used for integrity check. The information used for integrity check is, more specifically, information used by the second device to perform an integrity check. For example, the information used for integrity check may include MAC-I.

The first information in embodiments of this application is described above. A manner of transmitting the first information in embodiments of this application is described below with reference to Embodiment 7 and Embodiment 8.

### Embodiment 7: The first information may be carried in a physical control channel, and/or in a cyclic redundancy check CRC of a to-be-transmitted encoded block

In embodiments of this application, depending on different content included in the first information, a corresponding carrying manner may vary. For example, if the first information includes serial number (serial number, SN) information of the first device, the first information may be carried in a physical control channel. For another example, if the first information includes the information used for integrity check, the first information is carried in the CRC of the encoded block. For another example, if the first information includes the bearer information of the first device, the first information may be carried in a physical control channel.

In embodiments of this application, the first information may alternatively be determined in another manner. In some implementations, if the first information includes a bearer identifier of a first bearer in the first device, the first information is a preset value. In some other implementations, if the first information includes a bearer identifier of a first bearer in the first device, the first information may be determined based on information of a data block transmitted by using the first bearer, where the information of the data block may be, for example, bearer-related information in the data block. Accordingly, a receiving end of the data block may calculate a complete bearer identifier of the first bearer based on bearer-related information corresponding to one or more data blocks received.

It should be noted that, in embodiments of this application, the bearer-related information corresponding to one or more data blocks received may be transmitted by using a physical control channel. Certainly, in embodiments of this application, the bearer-related information corresponding to one or more data blocks may be transmitted in another manner.

The carrying manner of the first information in embodiments of this application is described above. A granularity of the first information in embodiments of this application is described below. In some implementations, the first device may include a bearer, and the bearer is associated with the first information. In other words, the first information is used for performing integrity protection on all of information transmitted by using the bearer in the first device. Certainly, in embodiments of this application, the first information is used for performing integrity protection on part of information transmitted by using the bearer in the first device.

In embodiments of this application, the first device including a bearer may be understood as the first device including only one bearer. Certainly, the first device including a bearer may alternatively be understood as the first device including a plurality of bearers. The bearer described above is only one of the plurality of bearers.

In embodiments of this application, the carrying manner of the first information and/or the granularity of the first information may be used in combination with any one of the protocol stacks described above. For example, the foregoing carrying manner of the first information may be used in combination with the protocol stack described in Embodiment 3-1 and/or the protocol stack described in Embodiment 3-2. For another example, the carrying manner of the first information may alternatively be used in combination with the protocol stack described in Embodiment 3-3. For another example, the carrying manner of the first information may be used in combination with the protocol stack described in Embodiment 4-1. For another example, the carrying manner of the first information may alternatively be used in combination with the protocol stack described in Embodiment 4-2.

In addition, in embodiments of this application, the carrying manner of the first information and/or the granularity of the first information may be used in combination with the foregoing scheme of performing integrity protection at the physical layer. For example, the SN information is transmitted by using a physical layer control channel. Accordingly, the first device may obtain the COUNT value at the physical layer based on an SN in combination with a locally maintained HFN. Then, the first device calculates an integrity protection check bit MAC-I based on the COUNT value and a bearer identifier (bearer ID) of the first device, to obtain a CRC portion. Subsequently, the first device performs a channel encoding operation.

### Embodiment 8: The first information may be carried in one or more of the following: a medium access control protocol data unit MAC PDU, a MAC sub-PDU, a medium access control control element MAC CE, or a CRC of an encoded block

In embodiments of this application, depending on different content included in the first information, a corresponding carrying manner may vary. For example, if the first information includes serial number SN information of the first device, the first information is carried in the MAC PDU or the MAC sub-PDU. For another example, if the first information includes information used for integrity check, the first information is carried in one or more of the MAC PDU, the MAC sub-PDU, the MAC control element (control element, CE), or the CRC of the encoded block. For another example, if the first information includes the bearer information of the first device, the first information is carried in the MAC PDU or the MAC sub-PDU.

In some implementations, the first information being carried in the MAC PDU, may be understood as the first information being carried in a header of the MAC PDU. Certainly, in embodiments of this application, the first information being carried in the MAC PDU may be understood as the first information being carried in a subheader of the MAC PDU.

In some implementations, the first information being carried in the MAC sub-PDU may be understood as the first information being carried in a header of the MAC sub-PDU. Certainly, in embodiments of this application, the first information being carried in the MAC sub-PDU may be understood as the first information being carried in a subheader of the MAC sub-PDU. If the first information is carried in the MAC sub-PDU, the first information is carried in a header or a subheader of the MAC sub-PDU.

The carrying manner of the first information in embodiments of this application is described above. A granularity of the first information in embodiments of this application is described below. In some implementations, the first device may include a plurality of bearers, and a first bearer in the plurality of bearers is associated with the first information. In other words, the first information is used for performing integrity protection on all of information transmitted by using the first bearer in the first device. Certainly, in embodiments of this application, the first information is used for performing integrity protection on part of information transmitted by using the first bearer in the first device.

In embodiments of this application, the first information that includes different content may have a same granularity. For example, a granularity corresponding to the SN information, the bearer information of the first device, and the information used for integrity check may be the first bearer. For another example, a granularity corresponding to the SN information, the bearer information of the first device, and the information used for integrity check may be a MAC PDU. For another example, a granularity corresponding to the SN information, the bearer information of the first device, and the information used for integrity check may be a MAC sub-PDU.

In embodiments of this application, the carrying manner of the first information and/or the granularity of the first information may be used in combination with any one of the protocol stacks described above that includes a MAC layer. For example, the carrying manner of the first information may be used in combination with the protocol stack described in Embodiment 3-3. For another example, the carrying manner of the first information may be used in combination with the protocol stack described in Embodiment 4-2.

In addition, in embodiments of this application, the carrying manner of the first information and/or the granularity of the first information may be used in combination with the foregoing scheme of performing integrity protection at the physical layer. In this case, the first device may determine, at the physical layer, the information used for integrity protection check. For example, MAC-I of the first device is carried in the CRC of the encoded block, and the SN information is transmitted by using a physical layer control channel. Accordingly, the first device may obtain the COUNT value at the physical layer based on an SN in combination with a locally maintained HFN. Then, the first device calculates the integrity protection check bit MAC-I based on the COUNT value and a bearer identifier (bearer ID) of the first device, to obtain a CRC portion. Subsequently, the first device performs a channel encoding operation.

In some other implementations, the carrying manner of the first information and/or the granularity of the first information may be used in combination with the foregoing scheme of performing integrity protection at the MAC layer. In this case, the first device may determine, at the MAC layer, the information used for integrity protection check. For example, MAC-I of the first device is carried in the MAC sub-PDU or the MAC CE. Accordingly, the first device may obtain the COUNT value at the MAC layer based on an SN in combination with a locally maintained HFN. Then, the first device calculates the integrity protection check bit MAC-I based on the COUNT value and a bearer identifier (bearer ID) of the first device. Subsequently, the first device may obtain a CRC portion at the MAC layer, and then perform a channel encoding operation.

Certainly, in embodiments of this application, the foregoing operation of encrypting the second information by the first device may alternatively be performed at the physical layer, which is not limited in embodiments of this application.

For ease of understanding, with reference to the protocol stacks shown in FIG. 17 and FIG. 18, a transmission manner of the first information, an integrity protection function, and an integrity check function in embodiments of this application are described below.

Based on the protocol stacks shown in FIG. 17, the SN information may be carried in a physical layer control channel, the MAC-I of the first device may be carried in the CRC portion of the encoded block, and bearer identifier information of the first bearer in the first device may be a default value. Accordingly, the first device may obtain the COUNT value at the physical layer based on an SN in combination with a locally maintained HFN, calculate the integrity protection check bit MAC-I based on the COUNT value in combination with the bearer identifier of the first bearer to obtain the CRC portion, then encrypt the to-be-transmitted second information, and subsequently perform a channel encoding operation.

For example, the second device is a relay device. The second device receives the SN, the MAC-I, and the bearer identifier of the first bearer that are transmitted by the first device. The second device may obtain the COUNT value at the physical layer based on the SN in combination with the locally maintained HFN, calculate the integrity protection check bit MAC-I based on the COUNT value in combination with the bearer identifier of the first bearer, and then perform the CRC portion based on this.

Based on the protocol stacks shown in FIG. 18, the SN information and the bearer identifier information of the first bearer in the first device may be carried in a header of the MAC PDU. If the MAC-I of the first device is carried in the CRC portion of the encoded block, the first device may obtain the COUNT value at the physical layer based on the SN in combination with the locally maintained HFN, calculate the integrity protection check bit MAC-I based on the COUNT value in combination with the bearer identifier of the first bearer to obtain the CRC portion, then encrypt the to-be-transmitted second information, and subsequently perform a channel encoding operation.

For example, the second device is a relay device. The second device receives the SN, the MAC-I, and the bearer identifier of the first bearer that are transmitted by the first device. The second device may obtain the COUNT value at the physical layer based on the SN in combination with the locally maintained HFN, calculate the integrity protection check bit MAC-I based on the COUNT value in combination with the bearer identifier of the first bearer, and then perform the CRC portion based on this.

If the MAC-I of the first device is carried in the MAC sub-PDU or the MAC CE, the first device may obtain the COUNT value at the MAC layer based on the SN in combination with the locally maintained HFN, calculate the integrity protection check bit MAC-I based on the COUNT value in combination with the bearer identifier of the first bearer to obtain the CRC portion, then encrypt the to-be-transmitted second information, and subsequently perform a channel encoding operation.

For example, the second device is a relay device. The second device receives the SN, the MAC-I, and the bearer identifier of the first bearer that are transmitted by the first device. The second device may obtain the COUNT value at the MAC layer based on the SN in combination with the locally maintained HFN, calculate the integrity protection check bit MAC-I based on the COUNT value in combination with the bearer identifier of the first bearer, and then perform the CRC portion based on this.

It should be noted that if the MAC-I of the first device is carried in the MAC sub-PDU or the MAC CE, the first device may alternatively encrypt to-be-transmitted information at the physical layer.

The method embodiments of this application are described above in detail with reference to FIG. 1 to FIG. 19. Apparatus embodiments of this application are described below in detail with reference to FIG. 20 to FIG. 22. It should be understood that the descriptions of the method embodiments correspond to descriptions of the apparatus embodiments, and therefore, for parts that are not described in detail, reference may be made to the foregoing method embodiments.

FIG. 20 is a schematic diagram of a communications apparatus according to an embodiment of this application. The communications apparatus 2000 shown in FIG. 20 may be a first device. The communications apparatus 2000 shown in FIG. 20 includes a transmitting unit 2010.

The transmitting unit 2010 is configured to transmit first information to a second device, where a protocol stack of the first device does not include a packet data convergence protocol PDCP layer.

In a possible implementation, the protocol stack of the first device includes a physical layer and a first protocol layer, the first protocol layer is an upper layer protocol adjacent to the physical layer in the protocol stack, and the first protocol layer is an application layer or a radio resource control RRC layer; or the protocol stack of the first device includes only a physical layer.

In a possible implementation, the first device includes a bearer, and the bearer is associated with the first information.

In a possible implementation, the first information is carried in a physical control channel, and/or in a cyclic redundancy check CRC of a to-be-transmitted encoded block.

In a possible implementation, in a case that the first information includes serial number SN information of the first device, the first information is carried in a physical control channel.

In a possible implementation, in a case that the first information includes information used for integrity check, the first information is carried in the CRC of the encoded block.

In a possible implementation, the first information includes a bearer identifier of a first bearer in the first device, where the first information is a preset value, or the first information is determined based on information of a data block transmitted by using the first bearer.

In a possible implementation, the communications apparatus further includes: a first processing unit, configured to perform integrity protection on to-be-transmitted second information at the physical layer.

In a possible implementation, the protocol stack of the first device includes a physical layer, a medium access control MAC layer, and a second protocol layer, where the second protocol layer is an upper layer protocol adjacent to the MAC layer in the protocol stack, and the second protocol layer is an application layer or an RRC layer.

In a possible implementation, the first device includes a plurality of bearers, and a first bearer in the plurality of bearers is associated with the first information.

In a possible implementation, the first information is carried in one or more of the following: a medium access control protocol data unit MAC PDU, a MAC sub-PDU, a medium access control control element MAC CE, or a CRC of a to-be-transmitted encoded block.

In a possible implementation, in a case that the first information is carried in the MAC PDU, the first information is carried in a header or a subheader of the MAC PDU; or in a case that the first information is carried in the MAC sub-PDU, the first information is carried in a header or a subheader of the MAC sub-PDU.

In a possible implementation, in a case that the first information includes the SN information, the first information is carried in the MAC PDU or the MAC sub-PDU.

In a possible implementation, in a case that the first information includes information used for integrity check, the first information is carried in one or more of the MAC PDU, the MAC sub-PDU, the MAC CE, or the CRC of the encoded block.

In a possible implementation, in a case that the first information includes information used for integrity protection check, and the first information is carried in a MAC sub-PDU or a MAC CE, the communications apparatus further includes: a second processing unit, configured to determine, at the MAC layer, the information used for integrity protection check.

In a possible implementation, in a case that the first information includes information used for integrity protection check, and the first information is carried in a CRC of a to-be-transmitted encoded block, the communications apparatus further includes: a third processing unit, configured to determine, at the physical layer, the information used for integrity protection check.

In a possible implementation, the first information is associated with an integrity protection function and/or an integrity check function.

In a possible implementation, the first information includes one or more of the following: SN information, bearer information of the first device, or information used for integrity check.

In a possible implementation, the first device is a zero-power terminal.

FIG. 21 is a schematic diagram of a communications apparatus according to another embodiment of this application. The communications apparatus 2100 shown in FIG. 21 is a second device and the communications apparatus 2100 includes a receiving unit 2110.

The receiving unit 2110 is configured to receive first information transmitted by a first device, where a protocol stack of the second device does not include a packet data convergence protocol PDCP layer.

In a possible implementation, the protocol stack of the second device includes a physical layer and a first protocol layer, the first protocol layer is an upper layer protocol adjacent to the physical layer in the protocol stack, and the first protocol layer is an application layer or a radio resource control RRC layer; or the protocol stack of the second device includes only a physical layer.

In a possible implementation, the first device includes a bearer, and the bearer is associated with the first information.

In a possible implementation, the first information is carried in a physical layer control channel, and/or in a cyclic redundancy check CRC of a to-be-transmitted encoded block.

In a possible implementation, in a case that the first information includes serial number SN information of the first device, the first information is carried in a physical control channel.

In a possible implementation, in a case that the first information includes information used for integrity check, the first information is carried in the CRC of the encoded block.

In a possible implementation, the first information includes a bearer identifier of a first bearer in the first device, where the first information is a preset value, or the first information is determined based on information of a data block transmitted by using the first bearer.

In a possible implementation, the receiving unit is further configured to receive second information transmitted by the first device; and a first processing unit is configured to perform an integrity check on the second information at the physical layer using the first information.

In a possible implementation, the protocol stack of the second device includes a physical layer, a medium access control MAC layer, and a second protocol layer, where the second protocol layer is an upper layer protocol adjacent to the MAC layer in the protocol stack, and the second protocol layer is an application layer or an RRC layer.

In a possible implementation, the first device includes a plurality of bearers, and a first bearer in the plurality of bearers is associated with the first information.

In a possible implementation, the first information is carried in one or more of the following: a medium access control protocol data unit MAC PDU, a MAC sub-PDU, a medium access control control element MAC CE, or a CRC of a to-be-transmitted encoded block.

In a possible implementation, in a case that the first information is carried in the MAC PDU, the first information is carried in a header or a subheader of the MAC PDU; or in a case that the first information is carried in the MAC sub-PDU, the first information is carried in a header or a subheader of the MAC sub-PDU.

In a possible implementation, in a case that the first information includes the SN information, the first information is carried in the MAC PDU or the MAC sub-PDU.

In a possible implementation, in a case that the first information includes information used for integrity check, the first information is carried in one or more of the MAC PDU, the MAC sub-PDU, the MAC CE, or the CRC of the encoded block.

In a possible implementation, in a case that the first information includes information used for integrity protection check, and the first information is carried in the MAC sub-PDU or the MAC CE, the receiving unit is further configured to receive third information transmitted by the first device; and a second processing unit is configured to perform an integrity check on the third information at the MAC layer using the information used for integrity protection check.

In a possible implementation, in a case that the first information includes information used for integrity protection check, and the first information is carried in the CRC of the encoded block, the receiving unit is configured to receive fourth information transmitted by the first device; and a third processing unit is configured to perform an integrity check on the fourth information at the physical layer using the information used for integrity protection check.

In a possible implementation, the first information is associated with an integrity protection function and/or an integrity check function.

In a possible implementation, the first information includes one or more of the following: SN information, bearer information of the first device, or information used for integrity check.

In a possible implementation, the second device is a network device; or the second device is a relay device of the first device.

In a possible implementation, the first device is a zero-power terminal.

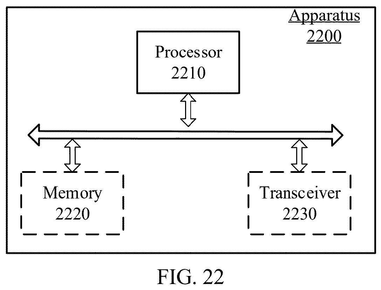

In an optional embodiment, the transmitting unit 2010 may be a transceiver 2230. The first device 2000 may further include a processor 2210 and a memory 2220, which are specifically shown in FIG. 22.

In an optional embodiment, the receiving unit 2110 may be a transceiver 2230. The second device 2100 may further include a processor 2210 and a memory 2220, which are specifically shown in FIG. 22.

FIG. 22 is a schematic structural diagram of a communications apparatus according to an embodiment of this application. Dashed lines in FIG. 22 indicate that a unit or module is optional. The apparatus 2200 may be configured to implement the method described in the foregoing method embodiments. The apparatus 2200 may be a chip, a terminal device, or a network device.

The apparatus 2200 may include one or more processors 2210. The processor 2210 may support the apparatus 2200 in implementing the methods described in the foregoing method embodiments. The processor 2210 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 2200 may further include one or more memories 2220. The memory 2220 stores a program that may be executed by the processor 2210 to cause the processor 2210 to perform the methods described in the foregoing method embodiments. The memory 2220 may be separated from or integrated into the processor 2210.

The apparatus 2200 may further include a transceiver 2230. The processor 2210 may communicate with another device or chip through the transceiver 2230. For example, the processor 2210 may transmit data to and receive data from another device or chip through the transceiver 2230.

An embodiment of this application further provides a computer-readable storage medium for storing a program. The computer-readable storage medium may be applied to the terminal or the network device provided in the embodiments of this application, and the program causes the computer to execute the method executed by the terminal or the network device in the embodiments of this application.

An embodiment of this application further provides a computer program product. The computer program product includes a program. The computer program product may be applied to the terminal or the network device provided in embodiments of this application, and the program causes a computer to execute the methods performed by the terminal or the network device in various embodiments of this application.

An embodiment of this application further provides a computer program. The computer program may be applied to the terminal or the network device provided in embodiments of this application, and the computer program causes a computer to execute the methods performed by the terminal or the network device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B can be obtained from A. Alternatively, it may mean that A indirectly indicates B, for example, A indicates C, and B can be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that can be used to indicate related information in devices (for example, including a terminal device and a network device), and a specific implementation thereof is not limited in this application. For example, being pre-defined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in the specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may be or may not be physically separate, and parts displayed as units may be or may not be physical units, and may be at one location, or may be distributed on a plurality of network elements. Some or all of the units may be selected according to actual requirements to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
transmitting, by a first device, first information to a second device, wherein a protocol stack of the first device does not comprise a packet data convergence protocol PDCP layer.

2. The method according to claim 1, wherein the protocol stack of the first device comprises a physical layer and a first protocol layer, the first protocol layer is an upper layer protocol adjacent to the physical layer in the protocol stack, and the first protocol layer is an application layer or a radio resource control RRC layer; or
the protocol stack of the first device comprises only a physical layer.

3. The method according to claim 2, wherein the first device comprises a bearer, and the bearer is associated with the first information.

4. The method according to claim 2 or 3, wherein the first information is carried in a physical control channel, and/or in a cyclic redundancy check CRC of a to-be-transmitted encoded block.

5. The method according to claim 4, wherein in a case that the first information comprises serial number SN information of the first device, the first information is carried in a physical control channel.

6. The method according to claim 4, wherein in a case that the first information comprises information used for integrity check, the first information is carried in the CRC of the encoded block.

7. The method according to claim 4, wherein the first information comprises a bearer identifier of a first bearer in the first device, wherein
the first information is a preset value; or
the first information is determined based on information of a data block transmitted by using the first bearer.

8. The method according to any one of claims 2 to 7, further comprising:
performing, by the first device, integrity protection on to-be-transmitted second information at the physical layer.

9. The method according to claim 1, wherein the protocol stack of the first device comprises a physical layer, a medium access control MAC layer, and a second protocol layer, wherein the second protocol layer is an upper layer protocol adjacent to the MAC layer in the protocol stack, and the second protocol layer is an application layer or an RRC layer.

10. The method according to claim 9, wherein the first device comprises a plurality of bearers, and a first bearer in the plurality of bearers is associated with the first information.

11. The method according to claim 9 or 10, wherein the first information is carried in one or more of following: a medium access control protocol data unit MAC PDU, a MAC sub-PDU, a medium access control control element MAC CE, or a CRC of a to-be-transmitted encoded block.

12. The method according to claim 11, wherein in a case that the first information is carried in the MAC PDU, the first information is carried in a header or a subheader of the MAC PDU; or
in a case that the first information is carried in the MAC sub-PDU, the first information is carried in a header or a subheader of the MAC sub-PDU.

13. The method according to claim 11 or 12, wherein in a case that the first information comprises SN information, the first information is carried in the MAC PDU or the MAC sub-PDU.

14. The method according to claim 11 or 12, wherein in a case that the first information comprises information used for integrity check, the first information is carried in one or more of the MAC PDU, the MAC sub-PDU, the MAC CE, or the CRC of the encoded block.

15. The method according to any one of claims 9 to 14, wherein in a case that the first information comprises information used for integrity protection check, and the first information is carried in a MAC sub-PDU or a MAC CE, the method further comprises:
determining, by the first device at a MAC layer, the information used for integrity protection check.

16. The method according to any one of claims 9 to 14, wherein in a case that the first information comprises information used for integrity protection check, and the first information is carried in a CRC of a to-be-transmitted encoded block, the method further comprises:
determining, by the first device at the physical layer, the information used for integrity protection check.

17. The method according to any one of claims 1 to 16, wherein the first information is associated with an integrity protection function and/or an integrity check function.

18. The method according to claim 17, wherein the first information comprises one or more of following: SN information, bearer information of the first device, or information used for integrity check.

19. The method according to any one of claims 1 to 18, wherein the first device is a zero-power terminal.

20. A wireless communication method, comprising:
receiving, by a second device, first information transmitted by a first device, wherein a protocol stack of the second device does not comprise a packet data convergence protocol PDCP layer.

21. The method according to claim 20, wherein the protocol stack of the second device comprises a physical layer and a first protocol layer, the first protocol layer is an upper layer protocol adjacent to the physical layer in the protocol stack, and the first protocol layer is an application layer or a radio resource control RRC layer; or
the protocol stack of the second device comprises only a physical layer.

22. The method according to claim 21, wherein the first device comprises a bearer, and the bearer is associated with the first information.

23. The method according to claim 21 or 22, wherein the first information is carried in a physical layer control channel, and/or in a cyclic redundancy check CRC of a to-be-transmitted encoded block.

24. The method according to claim 23, wherein in a case that the first information comprises serial number SN information of the first device, the first information is carried in a physical control channel.

25. The method according to claim 23, wherein in a case that the first information comprises information used for integrity check, the first information is carried in the CRC of the encoded block.

26. The method according to claim 23, wherein the first information comprises a bearer identifier of a first bearer in the first device, wherein
the first information is a preset value; or
the first information is determined based on information of a data block transmitted by using the first bearer.

27. The method according to any one of claims 21 to 26, further comprising:
receiving, by the second device, second information transmitted by the first device,
performing, by the second device, an integrity check on the second information at the physical layer using the first information.

28. The method according to claim 20, wherein the protocol stack of the second device comprises a physical layer, a medium access control MAC layer, and a second protocol layer, wherein the second protocol layer is an upper layer protocol adjacent to the MAC layer in the protocol stack, and the second protocol layer is an application layer or an RRC layer.

29. The method according to claim 28, wherein the first device comprises a plurality of bearers, and a first bearer in the plurality of bearers is associated with the first information.

30. The method according to claim 28 or 29, wherein the first information is carried in one or more of following: a medium access control protocol data unit MAC PDU, a MAC sub-PDU, a medium access control control element MAC CE, or a CRC of a to-be-transmitted encoded block.

31. The method according to claim 30, wherein in a case that the first information is carried in the MAC PDU, the first information is carried in a header or a subheader of the MAC PDU; or
in a case that the first information is carried in the MAC sub-PDU, the first information is carried in a header or a subheader of the MAC sub-PDU.

32. The method according to claim 30 or 31, wherein in a case that the first information comprises SN information, the first information is carried in the MAC PDU or the MAC sub-PDU.

33. The method according to claim 30 or 31, wherein in a case that the first information comprises information used for integrity check, the first information is carried in one or more of the MAC PDU, the MAC sub-PDU, the MAC CE, or the CRC of the encoded block.

34. The method according to any one of claims 28 to 33, wherein in a case that the first information comprises information used for integrity protection check, and the first information is carried in the MAC sub-PDU or the MAC CE, the method further comprises:
receiving, by the second device, third information transmitted by the first device; and
performing, by the second device, an integrity check on the third information at the MAC layer using the information used for integrity protection check.

35. The method according to any one of claims 28 to 33, wherein in a case that the first information comprises information used for integrity protection check, and the first information is carried in a CRC of the encoded block, the method further comprises:
receiving, by the second device, fourth information transmitted by the first device; and
performing, by the second device, an integrity check on the fourth information at the physical layer using the information used for integrity protection check.

36. The method according to any one of claims 20 to 35, wherein the first information is associated with an integrity protection function and/or an integrity check function.

37. The method according to claim 36, wherein the first information comprises one or more of following: SN information, bearer information of the first device, or information used for integrity check.

38. The method according to any one of claims 20 to 37, wherein the second device is a network device; or the second device is a relay device of the first device.

39. The method according to any one of claims 20 to 38, wherein the first device is a zero-power terminal.

40. A communications apparatus, wherein the communications apparatus is a first device, and comprises:
a transmitting unit, configured to transmit first information to a second device, wherein a protocol stack of the first device does not comprise a packet data convergence protocol PDCP layer.

41. The communications apparatus according to claim 40, wherein the protocol stack of the first device comprises a physical layer and a first protocol layer, the first protocol layer is an upper layer protocol adjacent to the physical layer in the protocol stack, and the first protocol layer is an application layer or a radio resource control RRC layer; or
the protocol stack of the first device comprises only a physical layer.

42. The communications apparatus according to claim 41, wherein the first device comprises a bearer, and the bearer is associated with the first information.

43. The communications apparatus according to claim 41 or 42, wherein the first information is carried in a physical control channel, and/or in a cyclic redundancy check CRC of a to-be-transmitted encoded block.

44. The communications apparatus according to claim 43, wherein in a case that the first information comprises serial number SN information of the first device, the first information is carried in a physical control channel.

45. The communications apparatus according to claim 43, wherein in a case that the first information comprises information used for integrity check, the first information is carried in the CRC of the encoded block.

46. The communications apparatus according to claim 43, wherein the first information comprises a bearer identifier of a first bearer in the first device, wherein
the first information is a preset value; or
the first information is determined based on information of a data block transmitted by using the first bearer.

47. The communications apparatus according to any one of claims 41 to 46, wherein the communications apparatus further comprises:
a first processing unit, configured to perform integrity protection on to-be-transmitted second information at the physical layer.

48. The communications apparatus according to claim 40, wherein the protocol stack of the first device comprises a physical layer, a medium access control MAC layer, and a second protocol layer, wherein the second protocol layer is an upper layer protocol adjacent to the MAC layer in the protocol stack, and the second protocol layer is an application layer or an RRC layer.

49. The communications apparatus according to claim 48, wherein the first device comprises a plurality of bearers, and a first bearer in the plurality of bearers is associated with the first information.

50. The communications apparatus according to claim 48 or 49, wherein the first information is carried in one or more of following: a medium access control protocol data unit MAC PDU, a MAC sub-PDU, a medium access control control element MAC CE, or a CRC of a to-be-transmitted encoded block.

51. The communications apparatus according to claim 50, wherein in a case that the first information is carried in the MAC PDU, the first information is carried in a header or a subheader of the MAC PDU; or
in a case that the first information is carried in the MAC sub-PDU, the first information is carried in a header or a subheader of the MAC sub-PDU.

52. The communications apparatus according to claim 50 or 51, wherein in a case that the first information comprises SN information, the first information is carried in the MAC PDU or the MAC sub-PDU.

53. The communications apparatus according to claim 50 or 51, wherein in a case that the first information comprises information used for integrity check, the first information is carried in one or more of the MAC PDU, the MAC sub-PDU, the MAC CE, or the CRC of the encoded block.

54. The communications apparatus according to any one of claims 48 to 53, wherein in a case that the first information comprises information used for integrity protection check, and the first information is carried in a MAC sub-PDU or a MAC CE, the communications apparatus further comprises:
a second processing unit, configured to determine, at the MAC layer, the information used for integrity protection check.

55. The communications apparatus according to any one of claims 48 to 53, wherein in a case that the first information comprises information used for integrity protection check, and the first information is carried in a CRC of a to-be-transmitted encoded block, the communications apparatus further comprises:
a third processing unit, configured to determine, at the physical layer, the information used for integrity protection check.

56. The communications apparatus according to any one of claims 40 to 55, wherein the first information is associated with an integrity protection function and/or an integrity check function.

57. The communications apparatus according to claim 56, wherein the first information comprises one or more of following: SN information, bearer information of the first device, or information used for integrity check.

58. The communications apparatus according to any one of claims 40 to 57, wherein the first device is a zero-power terminal.

59. A communications apparatus, wherein the communications apparatus is a second device, and comprises:
a receiving unit, configured to receive first information transmitted by a first device, wherein a protocol stack of the second device does not comprise a packet data convergence protocol PDCP layer.

60. The communications apparatus according to claim 59, wherein the protocol stack of the second device comprises a physical layer and a first protocol layer, the first protocol layer is an upper layer protocol adjacent to the physical layer in the protocol stack, and the first protocol layer is an application layer or a radio resource control RRC layer; or
the protocol stack of the second device comprises only a physical layer.

61. The communications apparatus according to claim 60, wherein the first device comprises a bearer, and the bearer is associated with the first information.

62. The communications apparatus according to claim 60 or 61, wherein the first information is carried in a physical layer control channel, and/or in a cyclic redundancy check CRC of a to-be-transmitted encoded block.

63. The communications apparatus according to claim 62, wherein in a case that the first information comprises serial number SN information of the first device, the first information is carried in a physical control channel.

64. The communications apparatus according to claim 62, wherein in a case that the first information comprises information used for integrity check, the first information is carried in the CRC of the encoded block.

65. The communications apparatus according to claim 62, wherein the first information comprises a bearer identifier of a first bearer in the first device, wherein
the first information is a preset value; or
the first information is determined based on information of a data block transmitted by using the first bearer.

66. The communications apparatus according to any one of claims 60 to 65, wherein the receiving unit is further configured to receive second information transmitted by the first device; and
a first processing unit is configured to perform an integrity check on the second information at the physical layer using the first information.

67. The communications apparatus according to claim 59, wherein the protocol stack of the second device comprises a physical layer, a medium access control MAC layer, and a second protocol layer, wherein the second protocol layer is an upper layer protocol adjacent to the MAC layer in the protocol stack, and the second protocol layer is an application layer or an RRC layer.

68. The communications apparatus according to claim 67, wherein the first device comprises a plurality of bearers, and a first bearer in the plurality of bearers is associated with the first information.

69. The communications apparatus according to claim 67 or 68, wherein the first information is carried in one or more of following: a medium access control protocol data unit MAC PDU, a MAC sub-PDU, a medium access control control element MAC CE, or a CRC of a to-be-transmitted encoded block.

70. The communications apparatus according to claim 69, wherein in a case that the first information is carried in the MAC PDU, the first information is carried in a header or a subheader of the MAC PDU; or
in a case that the first information is carried in the MAC sub-PDU, the first information is carried in a header or a subheader of the MAC sub-PDU.

71. The communications apparatus according to claim 69 or 70, wherein in a case that the first information comprises SN information, the first information is carried in the MAC PDU or the MAC sub-PDU.

72. The communications apparatus according to claim 69 or 70, wherein in a case that the first information comprises information used for integrity check, the first information is carried in one or more of the MAC PDU, the MAC sub-PDU, the MAC CE, or the CRC of the encoded block.

73. The communications apparatus according to any one of claims 67 to 72, wherein in a case that the first information comprises information used for integrity protection check, and the first information is carried in the MAC sub-PDU or the MAC CE,
the receiving unit is further configured to receive third information transmitted by the first device; and
a second processing unit is configured to perform an integrity check on the third information at the MAC layer using the information used for integrity protection check.

74. The communications apparatus according to any one of claims 67 to 72, wherein in a case that the first information comprises information used for integrity protection check, and the first information is carried in a CRC of the encoded block, the receiving unit is configured to receive fourth information transmitted by the first device; and
a third processing unit is configured to perform an integrity check on the fourth information at the physical layer using the information used for integrity protection check.

75. The communications apparatus according to any one of claims 59 to 74, wherein the first information is associated with an integrity protection function and/or an integrity check function.

76. The communications apparatus according to claim 75, wherein the first information comprises one or more of following: SN information, bearer information of the first device, or information used for integrity check.

77. The communications apparatus according to any one of claims 59 to 76, wherein the second device is a network device; or the second device is a relay device of the first device.

78. The communications apparatus according to any one of claims 59 to 77, wherein the first device is a zero-power terminal.

79. A communications device, comprising a transceiver, a memory, and a processor, wherein the memory is configured to store a program, and the processor is configured to invoke the program in the memory, and control the transceiver to receive or transmit a signal, to cause the communications device to execute the method according to any one of claims 1 to 39.

80. An apparatus, comprising a processor configured to invoke a program from a memory, to cause the apparatus to execute the method according to any one of claims 1 to 39.

81. A chip, comprising a processor, configured to invoke a program from a memory to cause a device installed with the chip to execute the method according to any one of claims 1 to 39.

82. A computer-readable storage medium, wherein the computer-readable storage medium stores a program, and the program causes a computer to execute the method according to any one of claims 1 to 39.

83. A computer program product, comprising a program, wherein the program causes a computer to execute the method according to any one of claims 1 to 39.

84. A computer program, wherein the computer program causes a computer to execute the method according to any one of claims 1 to 39.
